# EUROPEAN PATENT APPLICATION

(11) **EP 4 776 578 A1**
(43) Date of publication of application: **15.07.2026**
(21) Application number: 24882643.0
(22) Date of filing: 11.09.2024
(51) Int. Cl.: H04L 12/28, H04L 67/306, H04L 9/08, G16Y 10/75, G16Y 40/40

(54) **HOME APPLIANCE AND METHOD FOR OPERATING HOME APPLIANCE**

(30) Priority: 25.10.2023 KR 20230143744
(71) Applicant: Samsung Electronics Co., Ltd., Suwon-si, Gyeonggi-do 16677 (KR)
(72) Inventor: KIM, Jinhwan, Suwon-si Gyeonggi-do 16677 (KR); KIM, Hyunsoo, Suwon-si Gyeonggi-do 16677 (KR); JEONG, Jinwoo, Suwon-si Gyeonggi-do 16677 (KR); HAHM, Seongil, Suwon-si Gyeonggi-do 16677 (KR)
(74) Representative: Gulde & Partner
(86) International application number: PCT/KR2024/013820
(87) International publication number: WO 2025/089614

(57) **Abstract**

Various embodiments of the present disclosure relate to a home appliance and a method for operating the home appliance. To this end, the home appliance may: acquire temporary account information from a first mobile device to which the home appliance is connected using a communication interface; store the temporary account information in a memory; transmit the temporary account information and home appliance information corresponding to the home appliance to a server to which the home appliance is connected using the communication interface, so as to temporarily register the home appliance in the server; receive, from the server, a user account information change request including user account information corresponding to a user of the home appliance; and in response to reception of the user account information change request, change the stored temporary account information to the user account information.

## Description

### [Technical Field]

The disclosure relates to a home appliance and a method for operating the same. Specifically, embodiments of the disclosure relate to a method of switching registration of at least one home appliance temporarily registered to a temporary account or a temporary server (or an IoT temporary server) of a server (or an IoT server) to a user account of the server.

### [Background Art]

As Internet of things (IoT) products become widely available, the convenience of life for users is being enhanced by surrounding objects being connected to the Internet. Recently, home appliances including a communication module such as a Wi-Fi module have become widely available and are being used by being connected to the Internet. In order for a user to monitor or control a home appliance owned by the user using a communication network, an onboarding procedure of connecting the home appliance owned by the user to the Internet and registering the home appliance with a server needs to be performed. Since a home appliance may have limitations in a user input/output interface, a mobile device such as a smartphone may mediate the onboarding procedure of the home appliance.

As IoT home appliances increase, there is a need to enhance usability and convenience for users in performing the onboarding procedure.

### [Disclosure of Invention]

### [Solution to Problems]

The disclosure provides a home appliance and a method of operating the home appliance. Specifically, various embodiments of the disclosure relate to a method and a home appliance for switching registration of at least one home appliance registered to a temporary account or a temporary server of a server to an actual user account of the server.

According to an embodiment of the disclosure, a home appliance may include a communication interface performing data communication with a server or a first mobile device; a memory storing at least one instruction; and at least one processor electrically connected to the memory and executing the at least one instruction. The at least one processor may obtain temporary account information from the first mobile device connected using the communication interface, store the temporary account information in the memory, temporarily register the home appliance with the server by transmitting the temporary account information and home appliance information to the server connected using the communication interface, receive a user account information change request including user account information corresponding to a user of the home appliance from the server, and change the stored temporary account information to the user account information in response to receiving the user account information change request.

According to an embodiment, in response to the server receiving the temporary account information and the home appliance information from the home appliance, the server may generate a temporary registration key corresponding to the temporary account information and add the home appliance information to the temporary registration key and the temporary account information and store them. The temporary registration key may be transmitted to the first mobile device by the server and stored in the first mobile device.

According to an embodiment, the temporary registration key may be a random number arbitrarily generated by the server.

According to an embodiment, in case that the temporary account information is shared among a plurality of users, the temporary registration key may be separately generated corresponding to each user by the server.

According to an embodiment, a second mobile device may obtain the temporary registration key from the server or the first mobile device; and the second mobile device may transmit a user account switching request including the temporary registration key and the user account information to the server. In response to the server receiving the user account switching request from the second mobile device, the server may change the temporary account information corresponding to the temporary registration key to the user account information and transmit the user account information change request to the home appliance.

According to an embodiment, in generating the temporary registration key, the server may set an expiration time corresponding to the temporary registration key. In case that the expiration time has not expired, the server may change the temporary account information corresponding to the temporary registration key to the user account information and transmit a user account information change request to the home appliance.

According to an embodiment, the temporary account information may include a temporary account ID; and the user account information may include a user account ID corresponding to the user of the home appliance.

Further, according to an embodiment of the disclosure, a method of operating a home appliance may include obtaining temporary account information from a first mobile device connected using a communication interface; storing the temporary account information in a memory; temporarily registering the home appliance with a server by transmitting the temporary account information and home appliance information corresponding to the home appliance to the server connected using the communication interface; receiving a user account information change request including user account information corresponding to a user of the home appliance from the server; and changing the stored temporary account information to the user account information in response to receiving the user account information change request.

According to an embodiment, in response to the server receiving the temporary account information and the home appliance information from the home appliance, the server may generate a temporary registration key corresponding to the temporary account information and store the temporary registration key, the temporary account information, and the home appliance information;

According to an embodiment, the temporary registration key may be transmitted to the first mobile device by the server.

According to an embodiment, the temporary registration key may be a random number arbitrarily generated by the server.

According to an embodiment, in case that the temporary account information is shared among a plurality of users, the temporary registration key may be separately generated corresponding to each user by the server.

According to an embodiment, a second mobile device may obtain the temporary registration key from the server or the first mobile device; and the second mobile device may transmit a user account switching request including the temporary registration key and the user account information to the server. In response to the server receiving the user account switching request from the second mobile device, the server may change the temporary account information corresponding to the temporary registration key to the user account information and transmit the user account information change request to the home appliance.

According to an embodiment, in generating the temporary registration key, the server may set an expiration time corresponding to the temporary registration key. In case that the expiration time has not expired, the server may change the temporary account information corresponding to the temporary registration key to the user account information and transmit the user account information change request to the home appliance.

According to an embodiment, the temporary account information may include a temporary account ID; and the user account information may include a user account ID corresponding to the user of the home appliance.

Further, according to an embodiment of the disclosure, a computer-readable recording medium having recorded thereon a program for performing the method may be included.

According to various embodiments of the disclosure, by temporarily registering at least one home appliance to a temporary account of a server by an authorized user (e.g., a service technician), and by the user changing the temporary account to the user's own user account through an electronic device (e.g., a mobile device) of the user owning the home appliance, ownership of at least one home appliance registered to the temporary account may be transferred in batch and used.

In other words, according to various embodiments of the disclosure, in case that a user account has not yet been created, where the user does not want to expose the user account to another person (e.g., a service technician), or in an environment not connected to a server through communication such as a household unit before moving in, an authorized user may temporarily register at least one home appliance with a server on behalf of the user, and then the user may switch and register in batch to the user account, thereby increasing a network connection rate of home appliances and enhancing usability of IoT home appliances.

Further, the inconvenience in the home appliance registration procedure in which the user has to onboard each home appliance individually to the server may be eliminated, and by the operation of changing the temporary account to the user account, at least one home appliance registered to the temporary account may be switched and registered in batch to the user account, thereby enhancing user convenience in the registration procedure.

The effects obtainable from the exemplary embodiments of the disclosure are not limited to the effects mentioned above, and other effects not mentioned are clearly derived and understood by those of ordinary skill in the art to which the exemplary embodiments of the disclosure belong from the following description. In other words, unintended effects in practicing embodiments of the disclosure may also be derived by one of ordinary skill in the art from example embodiments of the disclosure.

### [Brief Description of Drawings]

FIG. 1 illustrates a home appliance, a user device, and a server according to various embodiments of the disclosure.
FIG. 2 illustrates a block diagram illustrating an electronic device according to various embodiments of the disclosure.
FIG. 3 illustrates a block diagram illustrating a home appliance according to various embodiments of the disclosure.
FIG. 4 is a conceptual view illustrating a method of switching registration of a temporarily registered home appliance to an actual user account according to an embodiment of the disclosure.
FIG. 5 is a flowchart illustrating a method of switching registration of a temporarily registered home appliance to an actual user account according to an embodiment of the disclosure.
FIG. 6 is a flowchart illustrating a method of temporarily registering a plurality of home appliances according to an embodiment of the disclosure.
FIG. 7 is a flowchart illustrating a method of a second mobile device (e.g., a user mobile device) obtaining a temporary registration key according to an embodiment of the disclosure.
FIG. 8 is a flowchart illustrating a method of switching registration of a home appliance temporarily registered to a temporary server to an actual user account of a server according to an embodiment of the disclosure.

### [Mode for the Invention]

It should be appreciated that various embodiments of the disclosure and the terms used therein are not intended to limit the technological features set forth herein to particular embodiments and include various changes, equivalents, or replacements for a corresponding embodiment.

It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases.

In the disclosure, such terms as "1st" and "2nd," or "first" and "second" may be used to simply distinguish a corresponding component from another, and does not limit the components in other aspect (e.g., importance or order).

In the disclosure, in case that a predetermined (e.g., first) component is referred to as being "coupled" or "connected" to another (e.g., second) component, with or without terms such as "functionally" or "communicatively," it means that the predetermined component may be connected to the other component directly (e.g., by wire), wirelessly, or through a third component.

In the disclosure, the terms "comprise" and/or "have" specify the presence of stated features, integers, steps, operations, elements, and/or components, but do not preclude the presence or addition of one or more other features, integers, steps, operations, elements, components, and/or groups thereof.

In the disclosure, in case that a component is referred to as being "connected," "coupled," "supported," or "in contact with" another component, this includes not only cases where the components are directly connected, coupled, supported, or in contact with each other, but also cases where the components are indirectly connected, coupled, supported, or in contact with each other through a third component.

In the disclosure, in case that a component is referred to as being positioned "on" another component, this includes not only cases where the component contacts the other component, but also cases where another component exists between the two components.

In the disclosure, the term "and/or" may denote a combination(s) of a plurality of related components as listed or any of the components.

Hereinafter, embodiments of the disclosure are described in detail with reference to drawings so that a person having ordinary skill in the art to which the disclosure belongs may easily implement them. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

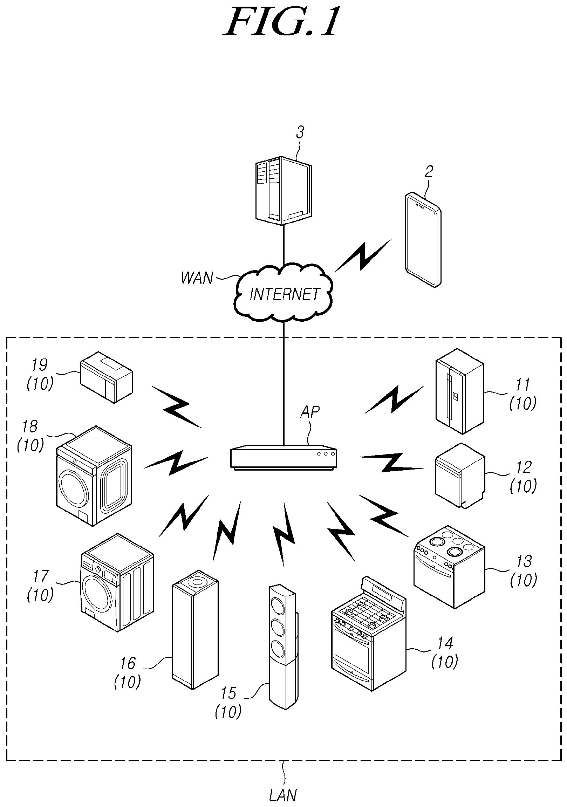

FIG. 1 illustrates a home appliance, a user device, and a server according to various embodiments of the disclosure.

The home appliance 10 may include another home appliance, a communication module capable of communicating with a user device 2 or a server 3, a user interface for receiving a user input or outputting information to the user, at least one processor for controlling the operation of the home appliance 10, and at least one memory storing a program for controlling the operation of the home appliance 10.

The home appliance 10 may be at least one of various types of home appliances. For example, as illustrated, the home appliance 10 may include at least one of a refrigerator 11, a dishwasher 12, an electric range 13, an electric oven 14, an air conditioner 15, a steam closet 16, a washing machine 17, a dryer 18, and a microwave oven 19, but is not limited thereto. For example, the home appliance 10 may include various types of home appliances such as a robot vacuum, a vacuum cleaner, and a television, which are not illustrated in the drawings. Further, the aforementioned home appliances are merely examples, and in addition to the aforementioned home appliances, a device that is connected to another home appliance, the user device 2, or the server 3 and may perform the operations described below may be included in the home appliance 10 according to an embodiment.

The server 3 may include a communication module capable of communicating with another server, home appliance 10 or the user device 2, at least one processor capable of processing data received from the other server, home appliance 10, or user device 2, and at least one memory capable of storing a program for processing data or processed data. The server 3 may be implemented as various computing devices such as a workstation, a cloud, a data drive, and a data station. The server 3 may be implemented as one or more servers physically or logically divided based on functions, detailed configurations of functions, data, or the like, and may transmit and receive data and process the transmitted and received data through communication between the servers.

The server 3 may manage the user account, register the home appliance 10 by associating the home appliance 10 with the user account, and manage or control the registered home appliance 10. For example, the user may access the server 3 through the user device 2 to create a user account. The user account may be identified by an ID and a password set by the user. The server 3 may register the home appliance 10 in the user account according to a predetermined procedure. For example, the server 3 may register, manage, and control the home appliance 10 by connecting identification information (e.g., a serial number or a MAC address) about the home appliance 10 to the user account.

The user device 2 may include a communication module capable of communicating with the home appliance 10 or the server 3, a user interface for receiving a user input or outputting information to the user, at least one processor for controlling the operation of the user device 2, and at least one memory storing a program for controlling the operation of the user device 2.

The user device 2 may be carried by the user or may be disposed in the user's home or office. The user device 2 may include, but is not limited to, a personal computer, a terminal, a mobile phone, a smart phone, a handheld device, a wearable device, or the like.

A program for controlling the home appliance 10, i.e., an application, may be stored in the memory of the user device 2. The application may be sold while being installed on the user device 2, or may be downloaded from an external server and installed.

The user may access the server 3 to create a user account by executing the application installed on the user device 2, and may communicate with the server 3 based on the logged-in user account to register the home appliance 10.

For example, in case that the home appliance 10 is manipulated so that the home appliance 10 may be connected to the server 3 according to the procedure guided by the application installed on the user device 2, the server 3 may register the home appliance 10 in the user account by registering the identification information (e.g., serial number or MAC address) about the home appliance 10 in the corresponding user account.

The user may control the home appliance 10 using the application installed on the user device 2. For example, in case that the user logs in to the user account with the application installed on the user device 2, the home appliance 10 registered in the user account appears, and in case that a control command for the home appliance 10 is input, the control command may be transferred to the home appliance 10 through the server 3.

The network may include both a wired network and a wireless network. The wired network may include a cable network, a telephone network, or the like, and the wireless network may include all networks that transmit and receive signals through radio waves. The wired network and the wireless network may be connected to each other. The network may include a wide area network (WAN) such as the Internet, a local area network (LAN) formed around an access point (AP), and a short-range wireless network that does not pass through the AP. The short-range wireless network may include, but is not limited to, Bluetooth^{™} (IEEE 802.15.1), Zigbee (IEEE 802.15.4), Wi-Fi direct, near-field communication (NFC), and Z-wave.

The AP may connect the home appliance 10 or the user device 2 to a WAN to which the server 3 is connected. The home appliance 10 or the user device 2 may be connected to the server 3 through a WAN. The AP may communicate with the home appliance 10 or the user device 2 using wireless communication such as Wi-Fi (Wi-Fi^{™}, IEEE 802.11), Bluetooth (Bluetooth^{™}, IEEE 802.15.1), Zigbee (IEEE 802.15.4), or the like, and may access the wide area network (WAN) using wired communication, but is not limited thereto.

According to various embodiments, the home appliance 10 may be directly connected to the user device 2 or the server 3 without passing through the AP.

The home appliance 10 may be connected to the user device 2 or the server 3 through a long-range wireless network or a short-range wireless network. For example, the home appliance 10 may be connected to the user device 2 through a short-range wireless network (e.g., Wi-Fi direct). As another example, the home appliance 10 may be connected to the user device 2 or the server 3 through a wide area network (WAN) using a long-range wireless network (e.g., a cellular communication module). As another example, the home appliance 10 may access a wide area network (WAN) using wired communication and may be connected to the user device 2 or the server 3 through the wide area network (WAN).

In case that the home appliance 10 is able to access the wide area network (WAN) using wired communication, it may operate as an access repeater. Accordingly, the home appliance 10 may connect another home appliance to the wide area network (WAN) to which the server 3 is connected. Further, the other home appliance may connect the home appliance 10 to the wide area network (WAN) to which the server 3 is connected.

The home appliance 10 may transmit information about the operation or the status to the other home appliance, the user device 2, or the server 3 through the network. For example, in case that the request is received from the server 3, in case that the specific event occurs in the home appliance 10, or periodically or in real time, the home appliance 10 may transmit information about the operation or the status to the other home appliance, the user device 2, or the server 3. In case that the information about the operation or the status is received from the home appliance 10, the server 3 may update the stored information about the operation or the status of the home appliance 10, and transmit the updated information about the operation and the status of the home appliance 10 to the user device 2 through the network. Here, updating information may include various operations for changing existing information, such as adding new information to existing information and replacing existing information with new information.

The home appliance 10 may obtain various information from the other home appliance, the user device 2, or the server 3, and provide the obtained information to the user. For example, the home appliance 10 may obtain information related to the function of the home appliance 10 (e.g., recipe, washing method, or the like) and various environmental information (e.g., weather, temperature, humidity, or the like) from the server 3, and output the obtained information through the user interface.

The home appliance 10 may operate according to a control command received from the other home appliance, the user device 2, or the server 3. For example, in case that the home appliance 10 obtains the user's prior approval to operate according to the control command of the server 3 even if there is no user input, the home appliance 10 may operate according to the control command received from the server 3. Here, the control command received from the server 3 may include a control command input by the user through the user device 2 or a control command based on a predetermined condition, but is not limited thereto.

The user device 2 may transmit information about the user to the home appliance 10 or the server 3 through the communication module. For example, the user device 2 may transmit information about the position of the user, the health condition of the user, the taste of the user, the schedule of the user, and the like to the server 3. The user device 2 may transmit the information about the user to the server 3 according to prior approval by the user.

The home appliance 10, the user device 2, or the server 3 may determine a control command using a technology such as artificial intelligence. For example, the server 3 may receive information about the operation or the status of the home appliance 10, receive the information about the user of the user device 2, process the information using technology such as artificial intelligence, and transmit the processing result or the control command to the home appliance 10 or the user device 2 based on the processing result.

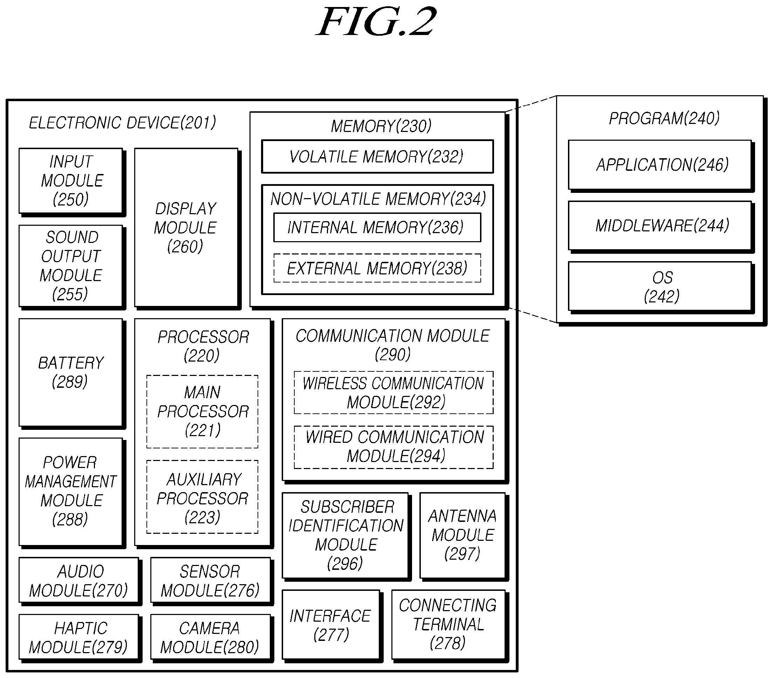

FIG. 2 is a block diagram illustrating an electronic device 201 according to various embodiments. For example, the electronic device (201) may correspond to the user device (2) illustrated in FIG. 1. Descriptions that overlap with those provided for the user device (2) of FIG. 1 will be omitted.

Referring to FIG. 2, the electronic device 201 may communicate with an external electronic device(not shown) via a short-range wireless communication network or at least one of an external electronic device or a server (e.g., server(3) in FIG.1) via a long-range wireless communication network. According to an embodiment, the electronic device 201 may communicate with an external electronic device via the server. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module(SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, in case that the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device. According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network (e.g., a short-range communication network, such as BluetoothTM, wireless-fidelity (Wi-Fi) direct, or infrared data association (IrDA)) or the second network(e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network or the second network, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device, or a network system (e.g., the second network). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network or the second network, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device via the server coupled with the second network. The external electronic device may be a device of a same type as, or a different type, from the electronic device 201. According to an embodiment, all or some of operations to be executed at the electronic device 201 may be executed at one or more of the external electronic devices. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device may include an internet-of-things (IoT) device. The server may be an intelligent server using machine learning and/or a neural network. According to an embodiment, the external electronic device or the server may be included in the second network. The electronic device 201 may be applied to intelligent services (e.g., a smart home, a smart city, a smart car, or healthcare) based on 5G communication technology or IoT-related technology.

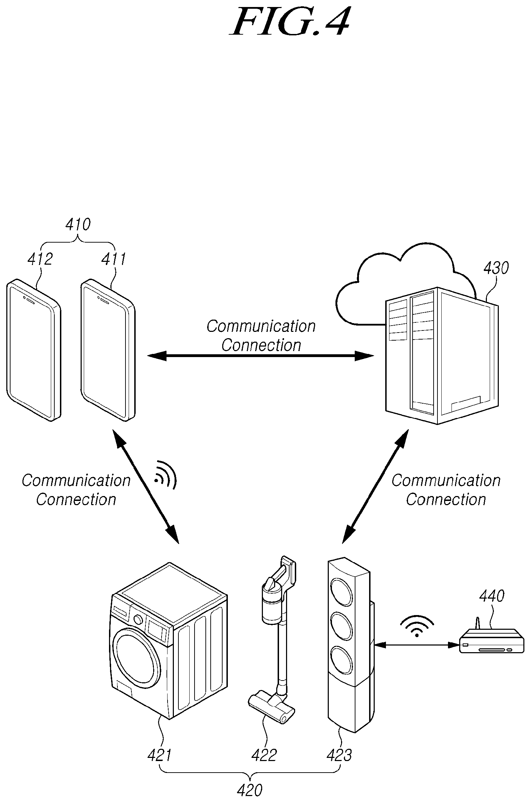

Operations performed by an electronic device 201 according to embodiments of the disclosure are described below with reference to FIGS. 4 to 8.

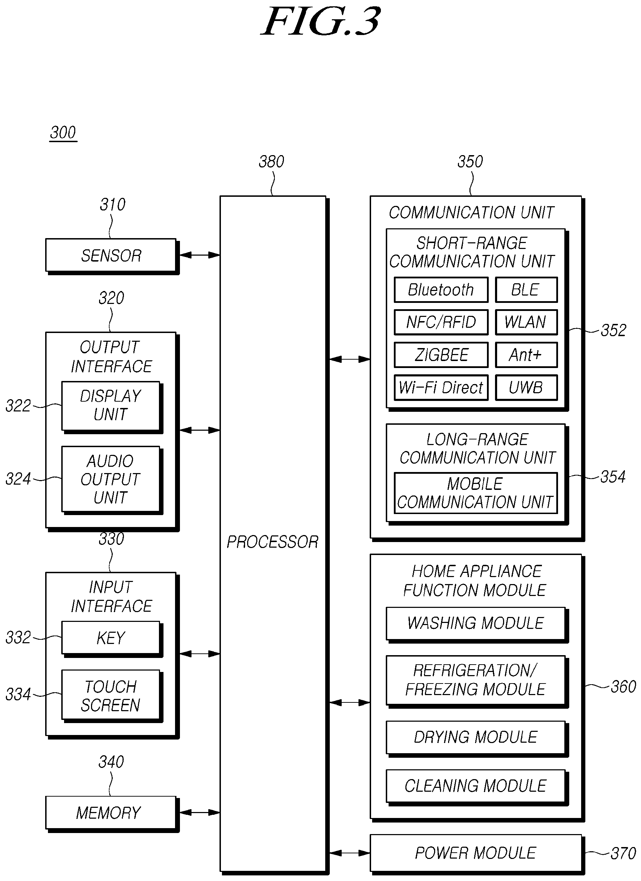

FIG. 3 is a block diagram illustrating a home appliance according to various embodiments of the disclosure.

A home appliance 300 illustrated in FIG. 3 may correspond to the home appliance 10 illustrated in FIG. 1. Accordingly, descriptions overlapping the description of the home appliance 10 of FIG. 1 are omitted.

Referring to FIG. 3, the home appliance 300 may include a sensor 310, an output interface 320, an input interface 330, a memory 340, a communication unit 350, a home appliance function module 360, a power module 370, and a processor 380. The home appliance 300 may be configured with various combinations of the components illustrated in FIG. 3, and not all the components illustrated in FIG. 3 are essential components.

The sensor 310 may include various types of sensors, and for example, the sensor 310 may include various types of sensors such as an image sensor, an infrared sensor, an ultrasonic sensor, a LiDAR sensor, a human detection sensor, a motion detection sensor, a proximity sensor, and an illuminance sensor. Since functions of each sensor may be intuitively inferred by those skilled in the art from their names, detailed descriptions are omitted.

The output interface 320 may include a display unit 322 and an audio output unit 324. The audio output unit 324 may be implemented as, e.g., a speaker. The output interface 320 outputs various notifications, messages, information, or the like generated by the processor 380.

The input interface 330 may include a key 332 and a touchscreen 334. The input interface 330 receives a user input and transmits it to the processor 380.

The memory 340 stores various information, data, instructions, programs, or the like necessary for operation of the home appliance 300. The memory 340 may include at least one of a volatile memory or a non-volatile memory, or a combination thereof. The memory 340 may include a storage medium of at least one type among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, and optical disk. Further, the home appliance 300 may operate a web storage or a cloud server performing a storage function on the Internet.

The communication unit 350 may include at least one of a short-range communication module 352 or a long-range communication module 354, or a combination thereof. The communication unit 350 may include at least one antenna for wirelessly communicating with another device.

The short-range wireless communication module 352 may include a Bluetooth communication module, a Bluetooth low energy (BLE) communication module, a near field communication (NFC) module, a wireless local area network (WLAN) (Wi-Fi) communication module, a Zigbee communication module, an infrared data association (IrDA) communication module, a Wi-Fi Direct (WFD) communication module, an ultra wideband (UWB) communication module, an Ant+ communication module, a microwave (uWave) communication module, or the like, but the disclosure is not limited thereto.

The long-range communication module 354 may include a communication module performing various types of long-range communication, and may include a mobile communication unit. The mobile communication unit transmits and receives a wireless signal to and from at least one of a base station, an external terminal, and a server over a mobile communication network. The wireless signals may include voice call signals, video call signals, or other various types of data according to transmission/reception of text/multimedia messages.

The home appliance function module 360 includes an operation module performing an original function of the home appliance 300. Although FIG. 3 illustrates that the home appliance function module 360 includes a washing module, a refrigeration/freezing module, a drying module, and a cleaning module, this is not limited thereto. According to an embodiment, the home appliance function module 360 may include a module specialized for a function of a specific home appliance. For example, in case that the home appliance 300 is a washer, the home appliance function module 360 includes a washing module. The washing module may include a washing tub, a water supply unit, a drain unit, a motor, a door, a detergent inlet, or the like. As another example, in case that the home appliance 300 is a refrigerator, the home appliance function module 360 may include a refrigeration/freezing module. The refrigeration/freezing module may include a container, a cooler, a door, a temperature sensor, or the like. For example, in case that the home appliance 300 is a dryer, the home appliance function module 360 may include a drying module. The drying module may include a laundry container, a motor, a dehumidifying unit, a drain unit, a door, a dust filter, a condenser, or the like. For example, in case that the home appliance 300 corresponds to a cleaning module, the home appliance function module 360 may include a cleaning module. The cleaning module may include a vacuum suction unit, a dust bin, a filter, a dust moving pipe, or the like.

The processor 380 controls overall operations of the home appliance 300. The processor 380 may execute a program stored in the memory 340 to control components of the home appliance 300. According to an embodiment of the disclosure, the processor 380 may include a separate neural processing unit (NPU) performing an operation of a machine learning model. Further, the processor 380 may include a central processing unit (CPU), a graphics processing unit (GPU), or the like.

FIG. 4 is a conceptual view illustrating a method of switching registration of a temporarily registered home appliance to an actual user account according to an embodiment of the disclosure. A home appliance 420 of FIG. 4 may correspond to the home appliance 10 of FIG. 1 and the home appliance 300 of FIG. 3 described above. A first mobile device 411 and a second mobile device 412 of FIG. 4 may correspond to the user device 2 of FIG. 1 and the electronic device 201 of FIG. 2. A server 430 of FIG. 4 may correspond to the server 3 of FIG. 1. In operations of the home appliance 420, the first mobile device 411, the second mobile device 412, and the server 430 described with reference to FIG. 4, portions overlapping those described with reference to FIGS. 1 to 3 may be omitted.

Referring to FIG. 4, the home appliance 420 may provide various functions while communicating with the first mobile device 411, the second mobile device 412, and the server 430. The first mobile device 411 may be a device operated by an authorized user (e.g., a service technician) who has authority to temporarily register a home appliance, and the second mobile device 412 may be a device operated by a user owning the home appliance 420. The home appliance 420 may be, e.g., any one of a washer, a refrigerator, a kimchi refrigerator, a TV, an air conditioner, an air purifier, a cleaning robot, a vacuum cleaner, a clothing care device, an oven, a microwave oven, an induction, an audio output device, or a smart home hub device.

The home appliance 420 may access the server 430 and be registered with the server 430. Further, the home appliance 420 may provide various functions through an application executed by a user device (e.g., the first mobile device 411 or the second mobile device 412). The application may be operated in conjunction with the server 430. The application may provide functions such as monitoring, control, automation, and voice assistant for the home appliance 420.

In order to provide the application function, the home appliance 420 may be registered with the first mobile device 411, the second mobile device 412, and the server 430, and may be communicatively connected to the first mobile device 411, the second mobile device 412, and the server 430. In case that the home appliance 420 is shipped from a factory as a new product and has not yet been registered with the server 430, various functions and/or operations provided by the application and the server 430 may not be performed. In the disclosure, 'new product state' refers to a state in which the home appliance 420 is not registered with the server 430. In case that the home appliance 420 is not registered with the server 430, the home appliance 420 may generate and output information indicating that itself is in a new product state and registration with the server 430 is required.

According to an embodiment, the home appliance 420 may establish a device-to-device (D2D) communication connection to the first mobile device 411 operated by an authorized user (e.g., a service technician) who has authority to temporarily register the home appliance 420 in the new product state.

According to an embodiment, for device-to-device communication connection, the home appliance 420 may include a software enabled access point (Soft AP) module that allows the home appliance 420 to be recognized as a virtual access point (AP). A 'Soft AP' is a wireless LAN client but may also operate like a wireless AP by serving as a wireless access point (AP). According to an embodiment, the home appliance 420 may operate a Soft AP using a Wi-Fi module. The first mobile device 411 may establish a Wi-Fi communication connection to the home appliance 420 by connecting to the Soft AP of the home appliance 420 and may perform Wi-Fi communication with the home appliance 420. The Wi-Fi communication connection established between the first mobile device 411 and the home appliance 420 using the Soft AP may be performed through a Wi-Fi Direct method.

According to an embodiment, the first mobile device 411 may establish a communication connection to the server 430, access (e.g., sign-in) the server 430 using temporary account information corresponding to the authorized user, and obtain an access token including access authority information for the server from the server 430.

According to an embodiment, the home appliance 420 may obtain at least one of the temporary account information, AP information, and server connection information from the first mobile device 411 through the D2D communication connection. The home appliance 420 may store at least one of the temporary account information, the AP information, and the server connection information.

According to an embodiment, the temporary account information may include a temporary account ID corresponding to an authorized user (e.g., a service technician) who has authority to temporarily register a home appliance. The temporary account information may be pre-registered with the server 430. It is understood by those skilled in the art that a format of the temporary account information and a method of pre-registering the temporary account information with the server 430 are not limited to specific formats and methods.

According to an embodiment, the AP information may include an SSID and password information of an in-home AP. The AP information may further include at least one of an AP name and encryption type information. For example, the AP information may correspond to information of the in-home AP 440. The AP 440 enables data communication by connecting wireless devices to a wired communication cable. The AP 440 may include a router connected to a wired communication network and a wireless communication module for a wireless communication network.

According to an embodiment, the server connection information may include a server IP address (or server URL) and the access token. The access token may include access authority information for the server.

According to an embodiment, the home appliance 420 may establish a device-to-server (D2S) communication connection to the server 430 using the AP information (e.g., the AP 440 information) and the server connection information (e.g., the server 430 IP address and access token). The home appliance 420 may access (e.g., sign-in) the server 430 using the temporary account information and transmit the temporary account information and home appliance information corresponding to the home appliance 420. The home appliance information may include at least one of home appliance identification information (ID), a home appliance name, a home appliance type, hardware information, software information, ownership status information, operation status information, and control information. The ownership status information may include information on whether the home appliance 420 has been previously registered to a user account. In an embodiment, in case that the home appliance 420 is already registered to a user account, the ownership status information may include registered user account information. In case that the home appliance 420 is not registered to any user account, the ownership status information may include new product state information. The control information may include information for setting access or control authority for each resource of the home appliance 420 or for setting an operation mode of the home appliance 420.

The home appliance 420 may temporarily register the home appliance 420 to a temporary account corresponding to the temporary account information of the server 430 by transmitting the temporary account information and the home appliance information. In other words, the home appliance 420 may be registered to the temporary account of the server 430 through the temporary registration process.

According to an embodiment, in response to receiving the temporary account information and the home appliance information from the home appliance 420, the server 430 may generate a temporary registration key corresponding to the temporary account information. The temporary registration key may be a random number arbitrarily generated by the server, but the disclosure is not limited thereto. The server 430 may store the temporary registration key corresponding to the temporary account information. According to an embodiment, in case that the temporary account information is shared among a plurality of users, the server 430 may separately generate a temporary registration key for each corresponding user, and may store each temporary registration key corresponding to each user.

According to an embodiment, the server 430 may transmit the temporary registration key to the first mobile device 411. The temporary registration key may be stored in the first mobile device 411.

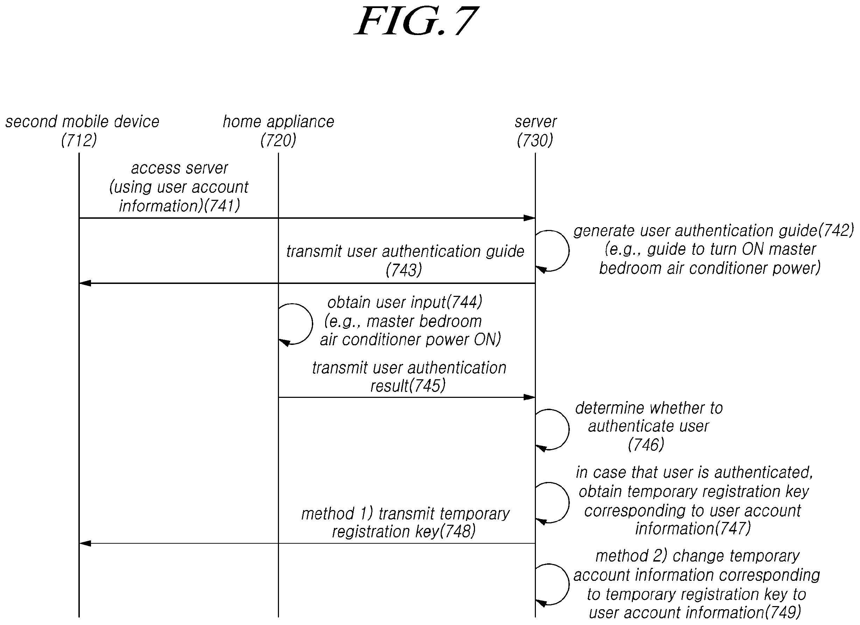

According to an embodiment, the second mobile device 412 operated by the user owning the home appliance 420 may obtain the temporary registration key from the first mobile device 411 or the server 430 by various methods without limitation. An embodiment of a method of the second mobile device 412 obtaining the temporary registration key is described below with reference to FIG. 7.

According to an embodiment, the second mobile device 412 may transmit a user account switching request for the home appliance 420 to the server 430. The user account switching request may include the temporary registration key and user account information. The user account information may include a user account ID corresponding to the user owning the home appliance 420. The user account information may be pre-registered with the server 430. It is understood by those skilled in the art that a format of the user account information and a method of pre-registering the user account information with the server 430 are not limited to specific formats and methods.

According to an embodiment, in response to the server 430 receiving the user account switching request from the second mobile device 412, the server 430 may change the temporary account information corresponding to the temporary registration key to the user account information. According to an embodiment, in case that a plurality of home appliances are temporarily registered to the temporary account information, the plurality of home appliances may be registered in batch to a user account corresponding to the user account information by changing to the user account information.

According to an embodiment, the server 430 may transmit the user account information change request to the home appliance 420. The server 430 may transmit completion of user registration for the home appliance 420 to the second mobile device 412.

According to an embodiment, in response to the home appliance 420 receiving the user account information change request, the home appliance 420 may change the stored temporary account information to the user account information.

According to an embodiment, by temporarily registering at least one home appliance to a temporary account of a server by an authorized user (e.g., a service technician), and by the user changing the temporary account to the user's own user account through an electronic device (e.g., a mobile device) of the user owning the home appliance, ownership of at least one home appliance registered to the temporary account may be transferred in batch and used.

Further, according to an embodiment, the inconvenience in the home appliance registration procedure in which the user has to onboard each home appliance to the server may be eliminated, and by the operation of changing the temporary account to the user account, at least one home appliance registered to the temporary account may be switched and registered in batch to the user account, thereby enhancing user convenience in the registration procedure.

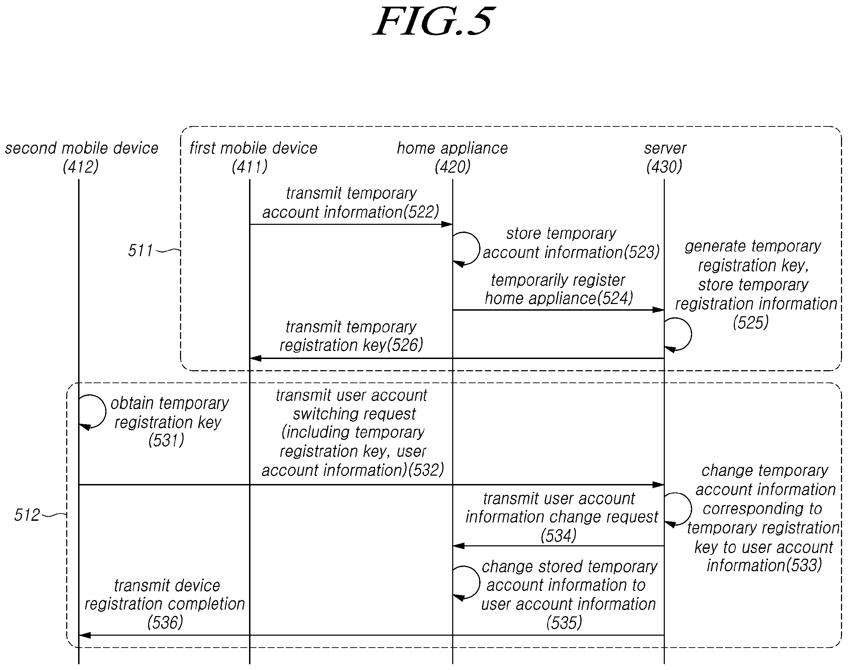

FIG. 5 is a flowchart illustrating a method of switching registration of a temporarily registered home appliance to an actual user account according to an embodiment of the disclosure. The home appliance 420 of FIG. 5 may correspond to the home appliances 10, 300 described above. The first mobile device 411 and the second mobile device 412 of FIG. 5 may correspond to the user device 2 of FIG. 1 and the electronic device 201 of FIG. 2. The server 430 of FIG. 5 may correspond to the server 3 of FIG. 1. In operations of the home appliance 420, the first mobile device 411, the second mobile device 412, and the server 430 described with reference to FIG. 5, portions overlapping those described with reference to FIGS. 1 to 4 may be omitted, and operations not illustrated in FIG. 5 may be added.

According to an embodiment, in operation 522, the first mobile device 411 may transmit at least one of temporary account information, AP information, and server connection information to the home appliance 420 through a D2D communication connection. According to an embodiment, the temporary account information may include a temporary account ID corresponding to an authorized user (e.g., a service technician) who has authority to temporarily register a home appliance. The temporary account information may be pre-registered with the server 430. It is understood by those skilled in the art that a format of the temporary account information and a method of pre-registering the temporary account information with the server 430 are not limited to specific formats and methods. According to an embodiment, the AP information may include an SSID and password information of an in-home AP. The AP information may further include at least one of an AP name and encryption type information. For example, the AP information may correspond to information of the in-home AP 440. The AP 440 enables data communication by connecting wireless devices to a wired communication cable. The AP 440 may include a router connected to a wired communication network and a wireless communication module for a wireless communication network. According to an embodiment, the server connection information may include a server IP address (or server URL) and the access token. The access token may include access authority information for the server.

According to an embodiment, in operation 523, the home appliance 420 may store at least one of the temporary account information, the AP information, and the server connection information.

According to an embodiment, the home appliance 420 may establish a D2S communication connection to the server 430 using the AP information and the server connection information. The home appliance 420 may access (e.g., sign-in) the server 430 using the server connection information, the temporary account information, and the access token.

According to an embodiment, in operation 524, the home appliance 420 may transmit the temporary account information and home appliance information corresponding to the home appliance 420 to the server 430. The home appliance 420 may temporarily register the home appliance 420 to a temporary account corresponding to the temporary account information of the server 430 by transmitting the temporary account information and the home appliance information to the server 430. In other words, the home appliance 420 may be registered to the temporary account of the server 430 through the temporary registration process. The home appliance information may include at least one of home appliance identification information (ID), a home appliance name, a home appliance type, hardware information, software information, ownership status information, operation status information, and control information. The ownership status information may include information on whether the home appliance 420 has been previously registered to a user account. In an embodiment, in case that the home appliance 420 is already registered to a user account, the ownership status information may include registered user account information. In case that the home appliance 420 is not registered to any user account, the ownership status information may include new product state information. The control information may include information for setting access or control authority for each resource of the home appliance 420 or for setting an operation mode of the home appliance 420.

According to an embodiment, in operation 525, in response to receiving the temporary account information and the home appliance information from the home appliance 420, the server 430 may generate a temporary registration key corresponding to the temporary account information. The temporary registration key may be a random number arbitrarily generated by the server 430, but the disclosure is not limited thereto. The server 430 may store the temporary registration key corresponding to the temporary account information. According to an embodiment, the server 430 may set an expiration time corresponding to the temporary registration key. According to an embodiment, in case that the temporary account information is shared among a plurality of users, the server 430 may separately generate a temporary registration key for each corresponding user, and may store each temporary registration key corresponding to each user.

According to an embodiment, in operation 526, the server 430 may transmit the temporary registration key to the first mobile device 411. The temporary registration key may be stored in the first mobile device 411.

According to an embodiment, a procedure 511 of 'temporarily registering' at least one home appliance to a temporary account of a server by an authorized user may include procedures of operations 522 to 526.

According to an embodiment, in operation 531, the second mobile device 412 operated by the user owning the home appliance 420 may obtain the temporary registration key from the first mobile device 411 or the server 430 by various methods without limitation. An embodiment of a method of the second mobile device 412 obtaining the temporary registration key is described below with reference to FIG. 7.

According to an embodiment, in operation 532, the second mobile device 412 may transmit a user account switching request for the home appliance 420 to the server 430. The user account switching request may include the temporary registration key and user account information. The user account information may include a user account ID corresponding to the user owning the home appliance 420. The user account information may be pre-registered with the server 430. It is understood by those skilled in the art that a format of the user account information and a method of pre-registering the user account information with the server 430 are not limited to specific formats and methods.

According to an embodiment, in operation 533, in response to the server 430 receiving the user account switching request from the second mobile device 412, the server 430 may change the temporary account information corresponding to the temporary registration key to the user account information. According to an embodiment, the server 430 may determine whether the expiration time has expired. In case that the expiration time has not expired, the server 430 may change the temporary account information corresponding to the temporary registration key to the user account information. In case that the expiration time has expired, the server 430 may delete the temporary account information and the home appliance information corresponding to the temporary registration key. According to an embodiment, the determination by the server 430 of whether the expiration time has expired and the operation based on the determination result may be performed at a predetermined period or a predetermined time separately from the procedure of operation 533. According to an embodiment, in case that a plurality of home appliances are temporarily registered to the temporary account information, the plurality of home appliances may be registered in batch to a user account corresponding to the user account information by changing to the user account information.

According to an embodiment, in operation 534, the server 430 may transmit the user account information change request to the home appliance 420. According to an embodiment, in case that the expiration time has not expired, the server 430 may transmit the user account information change request to the home appliance 420.

According to an embodiment, in operation 535, in response to the home appliance 420 receiving the user account information change request, the home appliance 420 may change the stored temporary account information to the user account information.

According to an embodiment, in operation 536, the server 430 may transmit completion of user registration for the home appliance 420 to the second mobile device 412.

According to an embodiment, a user registration procedure 512 of switching registration of the temporarily registered at least one home appliance to an actual user account of a server may include procedures of operations 531 to 536.

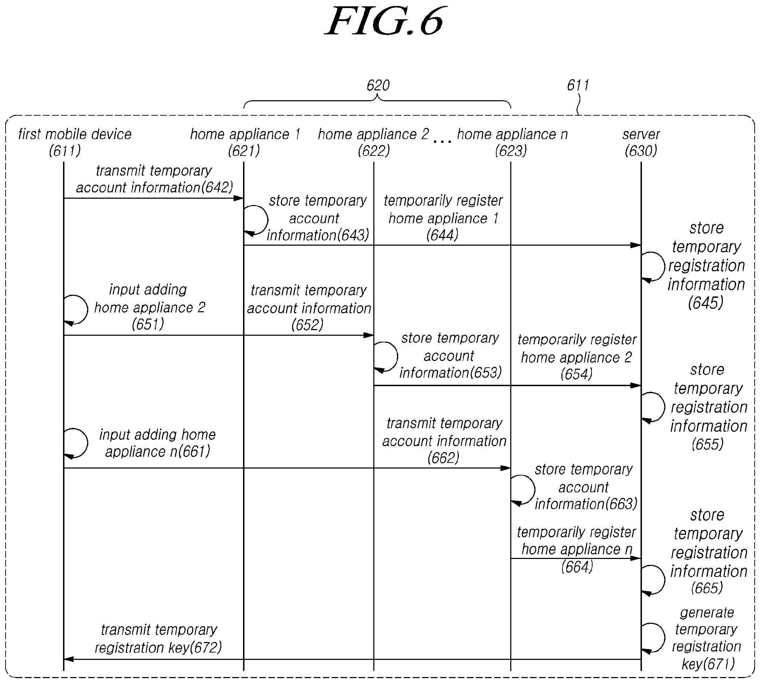

FIG. 6 is a flowchart illustrating a method of temporarily registering a plurality of home appliances according to an embodiment of the disclosure. A home appliance 620 of FIG. 6 may correspond to the home appliances 10, 300, 420 described above. A first mobile device 611 of FIG. 6 may correspond to the user device 2 of FIG. 1, the electronic device 201 of FIG. 2, and the first mobile device 411 of FIGS. 4 and 5. A server 630 of FIG. 6 may correspond to the servers 3, 430 described above. In operations of the home appliance 620, the first mobile device 611, and the server 630 described with reference to FIG. 6, portions overlapping those described with reference to FIGS. 1 to 5 may be omitted, and operations not illustrated in FIG. 6 may be added.

According to an embodiment, in operation 642, the first mobile device 611 may transmit at least one of temporary account information, AP information, and server connection information to a home appliance 1 621 through a D2D communication connection. Since detailed descriptions of the temporary account information, the AP information, and the server connection information are the same as those described above with reference to FIG. 5, descriptions thereof are omitted.

According to an embodiment, in operation 643, the home appliance 1 621 may store at least one of the temporary account information, the AP information, and the server connection information. Since detailed descriptions of D2S connection establishment between the home appliance 1 621 and the server 630 and access to the server 630 based on the information are the same as those described above with reference to FIG. 5, descriptions thereof are omitted.

According to an embodiment, in operation 644, the home appliance 1 621 may transmit the temporary account information and first home appliance information corresponding to the home appliance 1 621 to the server 630. The home appliance 1 621 may temporarily register the home appliance 1 621 to a temporary account corresponding to the temporary account information of the server 630 by transmitting the temporary account information and the first home appliance information to the server 630. In other words, the home appliance 1 621 may be registered to the temporary account of the server 630 through the temporary registration process. Since a detailed description of the first home appliance information is the same as the home appliance information described above with reference to FIG. 5, description thereof is omitted.

According to an embodiment, in operation 645, in response to receiving the temporary account information and the first home appliance information from the home appliance 1 621, the server 630 may store the first home appliance information in association with the temporary account information.

According to an embodiment, through procedures of operations 642 to 645, the home appliance 1 621 may be temporarily registered to a temporary account corresponding to the temporary account information of the server 630.

According to an embodiment, in operation 651, the first mobile device 611 may receive an input additionally requesting temporary registration of a home appliance 2 622 based on a user input.

According to an embodiment, in operation 652, the first mobile device 611 may transmit at least one of temporary account information, AP information, and server connection information to the home appliance 2 622 through a D2D communication connection. Since detailed descriptions of the temporary account information, the AP information, and the server connection information are the same as those described above with reference to FIG. 5, descriptions thereof are omitted.

According to an embodiment, in operation 653, the home appliance 2 622 may store at least one of the temporary account information, the AP information, and the server connection information. Since detailed descriptions of D2S connection establishment between the home appliance 2 622 and the server 630 and access to the server 630 based on the information are the same as those described above with reference to FIG. 5, descriptions thereof are omitted.

According to an embodiment, in operation 654, the home appliance 2 622 may transmit the temporary account information and second home appliance information corresponding to the home appliance 2 622 to the server 630. The home appliance 2 622 may additionally temporarily register the home appliance 2 622 to a temporary account corresponding to the temporary account information of the server 630 by transmitting the temporary account information and the second home appliance information to the server 630. In other words, the home appliance 2 622 may be additionally registered to the temporary account of the server 630 through the temporary registration process. Since a detailed description of the second home appliance information is the same as the home appliance information described above with reference to FIG. 5, description thereof is omitted.

According to an embodiment, in operation 655, in response to receiving the temporary account information and the second home appliance information from the home appliance 2 622, the server 630 may additionally store the second home appliance information in association with the temporary account information.

According to an embodiment, through procedures of operations 651 to 655, the home appliance 2 622 may be additionally temporarily registered to a temporary account corresponding to the temporary account information of the server 630.

According to an embodiment, in operation 661, the first mobile device 611 may receive an input additionally requesting temporary registration of a home appliance n 623 based on a user input.

According to an embodiment, in operation 662, the first mobile device 611 may transmit at least one of temporary account information, AP information, and server connection information to the home appliance n 623 through a D2D communication connection. Since detailed descriptions of the temporary account information, the AP information, and the server connection information are the same as those described above with reference to FIG. 5, descriptions thereof are omitted.

According to an embodiment, in operation 663, the home appliance n 623 may store at least one of the temporary account information, the AP information, and the server connection information. Since detailed descriptions of D2S connection establishment between the home appliance n 623 and the server 630 and access to the server 630 based on the information are the same as those described above with reference to FIG. 5, descriptions thereof are omitted.

According to an embodiment, in operation 664, the home appliance n 623 may transmit the temporary account information and nth home appliance information corresponding to the home appliance n 623 to the server 630. The home appliance n 623 may additionally temporarily register the home appliance n 623 to a temporary account corresponding to the temporary account information of the server 630 by transmitting the temporary account information and the nth home appliance information to the server 630. In other words, the home appliance n 623 may be additionally registered to the temporary account of the server 630 through the temporary registration process. Since a detailed description of the nth home appliance information is the same as the home appliance information described above with reference to FIG. 5, description thereof is omitted.

According to an embodiment, in operation 665, in response to receiving the temporary account information and the nth home appliance information from the home appliance n 623, the server 630 may additionally store the nth home appliance information in association with the temporary account information.

According to an embodiment, through procedures of operations 661 to 665, the home appliance n 623 may be additionally temporarily registered to a temporary account corresponding to the temporary account information of the server 630.

According to an embodiment, in operation 671, the server 630 may generate a temporary registration key corresponding to the temporary account information. The temporary registration key may be a random number arbitrarily generated by the server, but the disclosure is not limited thereto. The server 630 may store the temporary registration key corresponding to the temporary account information. Alternatively, the server 630 may generate the same temporary registration key in operations 645, 655, and 665. It is understood by those skilled in the art that a method of generating a temporary registration key is not limited thereto.

According to an embodiment, in operation 672, the server 630 may transmit the temporary registration key to the first mobile device 611. The temporary registration key may be stored in the first mobile device 611.

According to the present embodiment, a plurality of home appliances (e.g., the home appliance 1 621, the home appliance 2 622, and a home appliance n 623) may be temporarily registered to a temporary account of the server 630.

FIG. 7 is a flowchart illustrating a method of a second mobile device (e.g., a user mobile device) obtaining a temporary registration key according to an embodiment of the disclosure. A home appliance 720 of FIG. 7 may correspond to the home appliances 10, 300, 420, 620 described above. A second mobile device 712 of FIG. 7 may correspond to the user device 2, the electronic device 201, and the second mobile device 412 described above. A server 730 of FIG. 7 may correspond to the servers 3, 430, 630 described above. In operations of the home appliance 720, the second mobile device 712, and the server 730 described with reference to FIG. 7, portions overlapping those described with reference to FIGS. 1 to 6 may be omitted, and operations not illustrated in FIG. 7 may be added.

According to an embodiment, in operation 741, the second mobile device 712 may access the server 730 using user account information.

According to an embodiment, in operation 742, the server 730 may generate a user authentication guide. For example, a guide screen instructing to turn ON a power of an air conditioner in a master bedroom for user authentication may be generated.

According to an embodiment, in operation 743, the server 730 may transmit the user authentication guide to the second mobile device 712.

According to an embodiment, in operation 744, the home appliance 720 may obtain an input (e.g., a master bedroom air conditioner power ON input) from the user viewing the user authentication guide.

According to an embodiment, in operation 745, the home appliance 720 may transmit a user authentication result (e.g., master bedroom air conditioner power ON) corresponding to the user input.

According to an embodiment, in operation 746, the server 730 may determine whether to authenticate the user based on the user authentication result.

According to an embodiment, in case that the user is authenticated, in operation 747, a temporary registration key corresponding to the user account information may be obtained.

According to an embodiment, after obtaining the temporary registration key, the server 730 may perform operation 748 or operation 749.

According to an embodiment, in operation 748, the server 730 may transmit the temporary registration key to the second mobile device 712. The temporary registration key may be transmitted to the mobile device 712 in a manner without limitation such as QR or text.

According to an embodiment, in operation 749, the server 730 may change the temporary account information corresponding to the temporary registration key to the user account information. In other words, in case that the user is authenticated, the server 730 may omit a subsequent user authentication procedure through the temporary registration key by transmitting the temporary registration key to the second mobile device 712, and may directly change the temporary account information to the user account information.

In addition to a method of the second mobile device 712 obtaining a temporary registration key described with reference to FIG. 7, according to an embodiment, in case that an authorized user may directly meet a user of the second mobile device 712, the second mobile device 712 may directly obtain the temporary registration key from the first mobile device 411 by various methods without limitation.

Further, according to an embodiment, in case that an authorized user may not directly meet a user of the second mobile device 712, based on an input of the authorized user, the first mobile device 411 may upload the temporary registration key to a predetermined server (e.g., an apartment resident server) equipped with a user authentication means. The second mobile device 712 may download the temporary registration key from the predetermined server after going through a user authentication procedure.

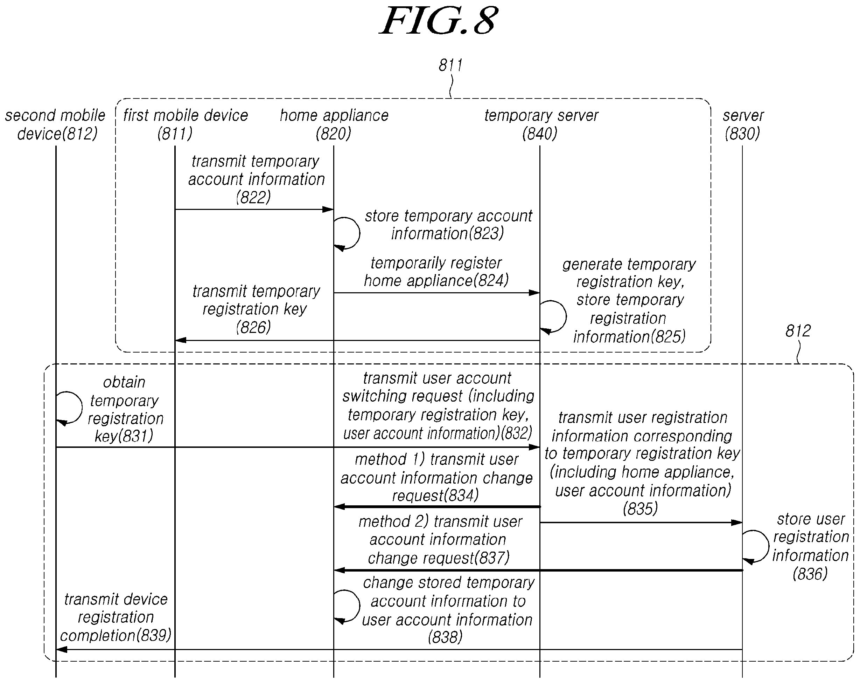

FIG. 8 is a flowchart illustrating a method of switching registration of a home appliance temporarily registered to a temporary server to an actual user account of a server according to an embodiment of the disclosure. A home appliance 820 of FIG. 8 may correspond to the home appliances 10, 300, 420, 620, 720 described above. A first mobile device 811 of FIG. 8 may correspond to the user device 2, the electronic device 201, and the first mobile devices 411, 611 described above. A second mobile device 812 of FIG. 8 may correspond to the user device 2, the electronic device 201, and the second mobile devices 412, 712 described above. A server 830 of FIG. 8 may correspond to the servers 3, 430, 630, 730 described above. In operations of the home appliance 820, the first mobile device 811, the second mobile device 812, and the server 830 described with reference to FIG. 8, portions overlapping those described with reference to FIGS. 1 to 7 may be omitted, and operations not illustrated in FIG. 8 may be added.

According to an embodiment, in operation 822, the first mobile device 811 may transmit at least one of temporary account information, AP information, and server connection information for a temporary server 840 to the home appliance 820 through a D2D communication connection. The temporary account information may include a temporary account ID corresponding to an authorized user (e.g., a service technician) who has authority to temporarily register a home appliance. Alternatively, the temporary account information may include a temporary account ID corresponding to a user owning the home appliance 820. The temporary account information may be pre-registered with the temporary server 840. It is understood by those skilled in the art that a format of the temporary account information and a method of pre-registering the temporary account information with the temporary server 840 are not limited to specific formats and methods. Since detailed descriptions of the AP information and the server connection information are the same as those described above with reference to FIG. 5, descriptions thereof are omitted.

According to an embodiment, in operation 823, the home appliance 820 may store at least one of the temporary account information, the AP information, and the server connection information. Since detailed descriptions of D2S connection establishment between the home appliance 820 and the temporary server 840 and access to the temporary server 840 based on the information are the same as those described above with reference to FIG. 5, descriptions thereof are omitted.

According to an embodiment, in operation 824, the home appliance 820 may transmit the temporary account information and home appliance information corresponding to the home appliance 820 to the temporary server 840. The home appliance 820 may temporarily register the home appliance 820 to a temporary account corresponding to the temporary account information of the temporary server 840 by transmitting the temporary account information and the home appliance information to the temporary server 840. In other words, the home appliance 820 may be registered to the temporary account of the temporary server 840 through the temporary registration process. Since a detailed description of the home appliance information is the same as the home appliance information described above with reference to FIG. 5, description thereof is omitted.

According to an embodiment, in operation 825, in response to receiving the temporary account information and the home appliance information from the home appliance 820, the temporary server 840 may generate a temporary registration key corresponding to the temporary account information. The temporary registration key may be a random number arbitrarily generated by the temporary server 840, but the disclosure is not limited thereto. The temporary server 840 may store the temporary registration key corresponding to the temporary account information. According to an embodiment, in case that the temporary account information is shared among a plurality of users, the temporary server 840 may separately generate a temporary registration key for each corresponding user, and may store each temporary registration key corresponding to each user.

According to an embodiment, in operation 826, the temporary server 840 may transmit the temporary registration key to the first mobile device 811. The temporary registration key may be stored in the first mobile device 811.

According to an embodiment, a procedure 811 of 'temporarily registering' at least one home appliance to a temporary account of the temporary server 840 by an authorized user may include procedures of operations 822 to 826.

According to an embodiment, in operation 831, the second mobile device 812 operated by the user owning the home appliance 820 may obtain the temporary registration key from the first mobile device 811 or the server 830 by various methods without limitation.

According to an embodiment, in operation 832, the second mobile device 812 may transmit a user account switching request for the home appliance 820 to the temporary server 840. The user account switching request may include the temporary registration key and user account information. The user account information may include a user account ID corresponding to the user owning the home appliance 820. The user account information may be pre-registered with the server 830. It is understood by those skilled in the art that a format of the user account information and a method of pre-registering the user account information with the server 830 are not limited to specific formats and methods.

According to an embodiment, in operation 834, in response to the temporary server 840 receiving the user account switching request from the second mobile device 812, the temporary server 840 may transmit the user account information change request to the home appliance 820. One of operation 834 and operation 837 to be described below may be selectively performed.

According to an embodiment, in operation 835, the temporary server 840 may transmit user registration information corresponding to the temporary registration key to the server 830. The user registration information may include the home appliance information and the user account information corresponding to the temporary registration key.

According to an embodiment, in operation 836, the server 830 may register the home appliance information to the user account information. According to an embodiment, in case that a plurality of home appliances are temporarily registered, a plurality of pieces of home appliance information may be registered in batch to the user account information.

According to an embodiment, in operation 837, the server 830 may transmit the user account information change request to the home appliance 820. As described above, one of operation 834 and operation 837 may be selectively performed.

According to an embodiment, in response to the home appliance 820 receiving the user account information change request by operation 834 or operation 837, in operation 838, the home appliance 820 may change the stored temporary account information to the user account information.

According to an embodiment, in operation 839, the server 830 may transmit completion of user registration for the home appliance 820 to the second mobile device 812.

According to an embodiment, a user registration procedure 812 of switching registration of the temporarily registered at least one home appliance to an actual user account of the server 830 may include procedures of operations 831 to 839.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

A program executed by the home appliance 420, the first mobile device 411, the second mobile device 412, and the server 430 described through this document may be implemented as a hardware component, a software component, and/or a combination of a hardware component and a software component. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A home appliance comprising:
a communication interface performing data communication with a server or a first mobile device;
a memory storing at least one instruction; and
at least one processor electrically connected to the memory and executing the at least one instruction, wherein the at least one processor is configured to:
obtain temporary account information from the first mobile device connected using the communication interface;
store the temporary account information in the memory;
temporarily register the home appliance with the server by transmitting the temporary account information and home appliance information to the server connected using the communication interface;
receive a user account information change request including user account information corresponding to a user of the home appliance from the server; and
change the stored temporary account information to the user account information in response to receiving the user account information change request.

2. The home appliance of claim 1,
wherein in response to the server receiving the temporary account information and the home appliance information from the home appliance, the server generates a temporary registration key corresponding to the temporary account information and stores the temporary registration key, the temporary account information and the home appliance information; and
wherein the temporary registration key is transmitted to the first mobile device by the server and stored in the first mobile device.

3. The home appliance of claim 2,
wherein the temporary registration key is a random number arbitrarily generated by the server.

4. The home appliance of claim 2,
wherein in case that the temporary account information is shared among a plurality of users, the temporary registration key is separately generated corresponding to each user by the server.

5. The home appliance of claim 2,
wherein a second mobile device obtains the temporary registration key from the server or the first mobile device;
wherein the second mobile device transmits a user account switching request including the temporary registration key and the user account information to the server; and
wherein in response to the server receiving the user account switching request from the second mobile device, the server changes the temporary account information corresponding to the temporary registration key to the user account information and transmits the user account information change request to the home appliance.

6. The home appliance of claim 5,
wherein in generating the temporary registration key, the server sets an expiration time corresponding to the temporary registration key; and
wherein in case that the expiration time has not expired, the server changes the temporary account information corresponding to the temporary registration key to the user account information and transmits a user account information change request to the home appliance.

7. The home appliance of claim 1,
wherein the temporary account information includes a temporary account ID; and
wherein the user account information includes a user account ID corresponding to the user of the home appliance.

8. A method of operating a home appliance, the method comprising:
obtaining temporary account information from a first mobile device connected using a communication interface;
storing the temporary account information in a memory;
temporarily registering the home appliance with a server by transmitting the temporary account information and home appliance information corresponding to the home appliance to the server connected using the communication interface;
receiving a user account information change request including user account information corresponding to a user of the home appliance from the server; and
changing the stored temporary account information to the user account information in response to receiving the user account information change request.

9. The method of claim 8,
wherein in response to the server receiving the temporary account information and the home appliance information from the home appliance, the server generates a temporary registration key corresponding to the temporary account information and stores the temporary registration key, the temporary account information, and the home appliance information; and
wherein the temporary registration key is transmitted to the first mobile device by the server.

10. The method of claim 9,
wherein the temporary registration key is a random number arbitrarily generated by the server.

11. The method of claim 9,
wherein in case that the temporary account information is shared among a plurality of users, the temporary registration key is separately generated corresponding to each user by the server.

12. The method of claim 9,
wherein a second mobile device obtains the temporary registration key from the server or the first mobile device;
wherein the second mobile device transmits a user account switching request including the temporary registration key and the user account information to the server; and
wherein in response to the server receiving the user account switching request from the second mobile device, the server changes the temporary account information corresponding to the temporary registration key to the user account information and transmits a user account information change request to the home appliance.

13. The method of claim 12,
wherein in generating the temporary registration key, the server sets an expiration time corresponding to the temporary registration key; and
wherein in case that the expiration time has not expired, the server changes the temporary account information corresponding to the temporary registration key to the user account information and transmits the user account information change request to the home appliance.

14. The method of claim 8,
wherein the temporary account information includes a temporary account ID; and
wherein the user account information includes a user account ID corresponding to a user of the home appliance.

15. A non-transitory computer-readable recording medium having recorded thereon at least one program for implementing the method of any one of claims 8 to 14.
